# EUROPEAN PATENT APPLICATION

(11) **EP 4 597 211 A1**
(43) Date of publication of application: **06.08.2025**
(21) Application number: 23872056.9
(22) Date of filing: 20.09.2023
(51) Int. Cl.: G02F 1/13, G02F 1/1345

(54) **LIGHT CONTROL SHEET**

(30) Priority: 29.09.2022 JP 2022156384
(71) Applicant: Toppan Holdings Inc., Tokyo 110-0016 (JP)
(72) Inventor: NAKAMURA, Gen, Tokyo 110-0016 (JP)
(74) Representative: TBK
(86) International application number: PCT/JP2023/034000
(87) International publication number: WO 2024/070828

(57) **Abstract**

A light control sheet further includes a back-directed sealing section (42E) that is supported by a portion between a front outer edge face (21E) of a front transparent substrate exposed from a light control layer and a rear-facing terminal definition surface (32E) in plan view and seals a portion of an edge face of the light control layer overlapping with the rear-facing terminal definition surface (32E), and a front-directed sealing section (42E) that is a front-directed sealing section (41E) which is supported by a portion between a back outer edge face (31E) of a back transparent substrate exposed from the light control layer and a front inner edge face (22E) and seals a portion of the edge face of the light control layer overlapping with the front inner edge face (22E). The front-directed sealing section (42E) is connected to the back-directed sealing section (42E) through a slit (S) and superimposed on the back-directed sealing section (42E) in a region including the slit (S).

## Description

### Technical Field

The present disclosure relates to a light control sheet including a light control layer between a front transparent substrate and a back transparent substrate.

### Background Art

Alight control sheet includes a front transparent substrate and a back transparent substrate. A side of the front transparent substrate supports a front transparent electrode layer. A side of the back transparent substrate supports a back transparent electrode layer. A light control layer is disposed between the front transparent electrode layer and the back transparent electrode layer. The light control layer includes a transparent polymer layer that defines a plurality of voids and a liquid crystal composition with which each of the voids is filled. Changing the voltage between the front transparent electrode layer and the back transparent electrode layer changes the alignment state of a liquid crystal compound included in the liquid crystal composition of the light control layer, thereby changing the degree of transparency of the light control sheet.

An edge of the light control sheet extending in the circumferential direction includes an edge face of the back transparent substrate, an edge face of the light control layer, and an edge face of the front transparent substrate. The edge face of the front transparent substrate and the edge face of the light control layer are disposed closer to the inner side of the back transparent substrate than the edge face of the back transparent substrate at the edge of the light control sheet is. A side of the back transparent substrate includes a back support section and a back edge section. The back support section supports the light control layer on the side of the back transparent substrate. The edge face of the front transparent substrate and the edge face of the light control layer partition the back edge section and the back support section as viewed from a viewpoint opposed to a side of the front transparent substrate. The back edge section is exposed from the light control layer to the extent that the edge face of the front transparent substrate and the edge face of the light control layer are disposed closer to the inner side of the back transparent substrate than the edge face of the back transparent substrate is. An edge sealing section is disposed at the back edge section of the back transparent substrate and seals the edge face of the light control layer that partitions the back edge section and the back support section. This achieves high sealability of the light control layer in the circumferential direction of the light control sheet and stabilizes the sealability (see, for example, PTL 1).

### Citation List

### Patent Literature

PTL 1: JP 2020-177039 A

### Summary of the Invention

### Technical Problem

Each of the transparent electrode layers includes a circuit section in contact with the light control layer and a terminal exposed from the light control layer. The front transparent electrode layer includes a front circuit section and a rear-facing terminal. The back transparent electrode layer includes a back circuit section and a front-facing terminal. The circuit sections are each electrically connected to a respective terminal. A voltage signal that drives the light control sheet is input to the terminal of each transparent electrode layer.

The front-facing terminal is exposed from the light control layer in the back transparent electrode layer as with the back edge section described above. The edge face of the front transparent substrate and the edge face of the light control layer are disposed closer to the inner side of the back transparent substrate than the edge face of the back transparent substrate at the front-facing terminal is. The front-facing terminal is partitioned from the back circuit section by the edge face of the front transparent substrate and the edge face of the light control layer as with the back edge section as viewed from the viewpoint opposed to the side of the front transparent substrate. A front-facing terminal sealing section is disposed at the edge of the front-facing terminal and seals the edge face of the light control layer that partitions the front-facing terminal. In this way, the front-facing terminal sealing section and the edge sealing section are supported by the side of the common back transparent substrate and conform to the edge face of the common front transparent substrate. The front-facing terminal sealing section may therefore extend from the edge sealing section along the edge face of the front transparent substrate.

In contrast, the rear-facing terminal is exposed from the light control layer in the front transparent electrode layer. The edge face of the back transparent substrate and the edge face of the light control layer are disposed closer to the inner side of the front transparent substrate than the edge face of the backfront transparent substrate at the rear-facing terminal is. The rear-facing terminal is partitioned from the front circuit section by the edge face of the back transparent substrate and the edge face of the light control layer. A rear-facing terminal sealing section is disposed at the edge of the rear-facing terminal and seals the edge face of the light control layer that partitions the rear-facing terminal. **In** this way, the rear-facing terminal sealing section and the edge sealing section are supported by the side of the respective different transparent substrates and conform to the edge face of the respective different transparent substrates. The rear-facing terminal sealing section that conforms to the edge face of the back transparent substrate is therefore divided from the edge sealing section that conforms to the edge face of the front transparent substrate. The division between the rear-facing terminal sealing section that seals the edge face of the light control layer and the edge sealing section that seals the edge face of the light control layer then prevents the light control layer from being sealed. It is to be noted that a requirement to increase the sealability of the light control layer applies to not only a light control sheet including the rear-facing terminal sealing section and the edge sealing section, but also a light control sheet in which the edge face of the light control layer is partitioned by different transparent substrates.

### Solution to Problem

A light control sheet that solves the problem includes: a front transparent substrate configured to support a front electrode layer; a back transparent substrate configured to support a back electrode layer; and a light control layer containing a liquid crystal composition. The front electrode layer and the back electrode layer are disposed between the front transparent substrate and the back transparent substrate. The light control layer is sandwiched between the front electrode layer and the back electrode layer. In plan view from a viewpoint opposed to a front surface of the front transparent substrate, an edge face of the front transparent substrate includes a front inner edge face, a front outer edge face, and a front connection edge face. The front connection edge face joins the front inner edge face and the front outer edge face. An edge face of the back transparent substrate includes a back inner edge face, a back outer edge face, and a back connection edge face. The back connection edge face joins the back inner edge face and the back outer edge face. The back inner edge face is disposed closer to an inner side of the front surface than the front outer edge face is. The back outer edge face is disposed closer to an outer side of the front surface than the front inner edge face is. The front connection edge face and the back connection edge face are included in a slit extending through the front transparent substrate and the back transparent substrate. The light control sheet further includes a back-directed sealing section and a front-directed sealing section. The back-directed sealing section is a portion of the front transparent substrate exposed from the light control layer in plan view. The back-directed sealing section is supported by a portion between the front outer edge face and the back inner edge face. The back-directed sealing section seals a portion of an edge face of the light control layer overlapping with the back inner edge face. The front-directed sealing section is a portion of the back transparent substrate exposed from the light control layer. The front-directed sealing section is supported by a portion between the back outer edge face and the front inner edge face. The front-directed sealing section seals a portion of the edge face of the light control layer overlapping with the front inner edge face. The front-directed sealing section is connected to the back-directed sealing section through the slit and is superimposed on the back-directed sealing section in a region including the slit.

### Brief Description of the Drawings

[Fig. 1] Fig. 1 is a plan view of a light control sheet.
[Fig. 2] Fig. 2 is a perspective view of an edge face of the light control sheet.
[Fig. 3] Fig. 3 is a cross-sectional view taken along a line III-III of Fig. 1.
[Fig. 4] Fig. 4 is a cross-sectional view taken along a line IV-IV of Fig. 1.
[Fig. 5] Fig. 5 is a cross-sectional view of the light control sheet.
[Fig. 6] Fig. 6 is a plan view of a light control sheet according to a modification example.
[Fig. 7] Fig. 7 is a plan view of the light control sheet according to the modification example.

### Description of the Embodiments

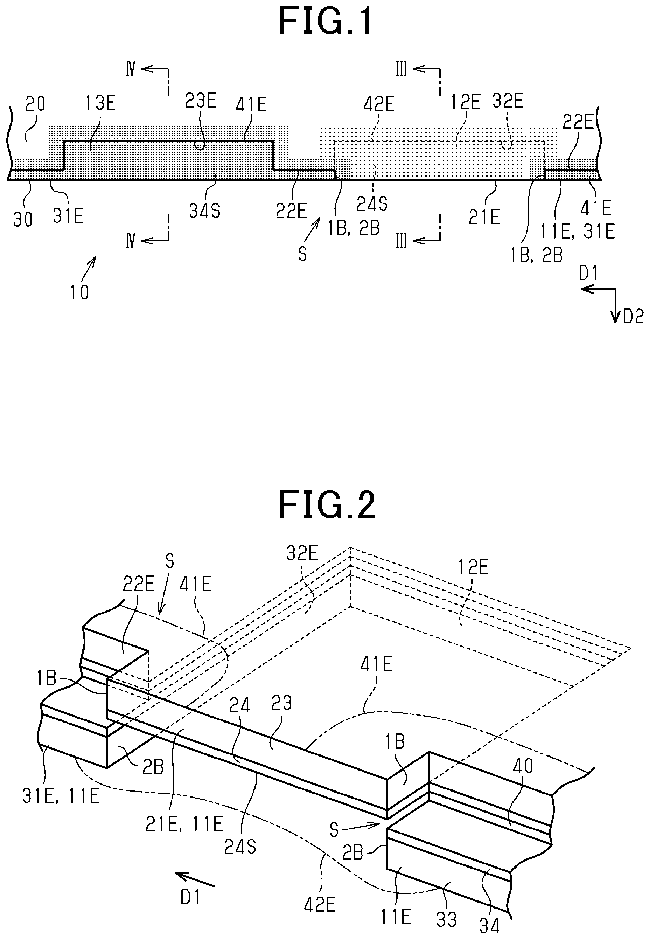

Hereinafter, an embodiment of a light control sheet will be described with reference to Figs. 1 to 5.

As illustrated in Fig. 1, a light control sheet 10 includes a front transparent film 20, a back transparent film 30, and a light control layer 40 (see Fig. 2). A portion of the edge faces of the light control sheet 10 is a sheet edge face 11E. The sheet edge face 11E extends in a first direction D1. The sheet edge face 11E includes one front outer edge face 21E and two back outer edge faces 31E. The front outer edge face 21E is a portion of the edge faces of the front transparent film 20. Each of the two back outer edge faces 31E is a portion of the edge faces of the back transparent film 30. One front outer edge face 21E is sandwiched between the two back outer edge faces 31E.

A second direction D2 is orthogonal to the first direction D1 in plan view from a viewpoint opposed to the front surface of the light control sheet 10. The second direction D2 is directed from the center of the light control sheet 10 to the sheet edge face 11E. It is to be noted that the light control sheet 10 may have a flat shape or a curved shape including the first direction D1 and the second direction D2. The sheet edge face 11E may have a straight-line shape or a curved shape.

### [Configuration of Sheet Layer]

As illustrated in Fig. 2, the front transparent film 20 includes a front transparent substrate 23 and a front electrode layer 24. The front transparent substrate 23 supports the front electrode layer 24. The back transparent film 30 includes a back transparent substrate 33 and a back electrode layer 34. The back transparent substrate 33 supports the back electrode layer 34.

The front electrode layer 24 and the back electrode layer 34 are disposed between the front transparent substrate 23 and the back transparent substrate 33. The light control layer 40 is sandwiched between the front electrode layer 24 and the back electrode layer 34. The light control layer 40 is driven by a voltage signal supplied between the front electrode layer 24 and the back electrode layer 34. The light control sheet 10 may further include an alignment layer between the front electrode layer 24 and the light control layer 40. The light control sheet 10 may further include an alignment layer between the back electrode layer 34 and the light control layer 40.

Each of the transparent substrates 23 and 33 has optical transparency of transmitting visible light and electrically insulating properties. Materials included in the respective transparent substrates 23 and 33 are organic polymer compounds or inorganic polymer compounds. An example of each of the organic polymer compounds is at least one selected from the group of polyesters, polyacrylates, polycarbonates, and polyolefins. An example of each of the inorganic polymer compounds is at least one selected from the group of silicon dioxide, silicon oxynitride, and silicon nitride.

Each of the electrode layers 24 and 34 has optical transparency of transmitting visible light and electric conductivity. An example of each of materials included in the respective electrode layers 24 and 34 is at least one selected from the group of indium tin oxide, fluorine-doped tin oxide, tin oxide, zinc oxide, a carbon nanotube, and poly3,4-ethylenedioxythiophene.

The application of a voltage causes the light control layer 40 to have a different light transmittance after the application from the light transmittance before the application. An example of the light control layer 40 includes a transparent organic polymer layer and a liquid crystal composition. The transparent organic polymer layer defines voids between the front electrode layer 24 and the back electrode layer 34, and the voids are filled with the liquid crystal composition. The voids of the transparent organic polymer layer are filled with the liquid crystal composition. The liquid crystal composition includes a liquid crystal compound. An example of the liquid crystal compound is at least one selected from the group of a Schiff base compound, an azo-based compound, an azoxy-based compound, a biphenyl-based compound, a terphenyl-based compound, a benzoic-acid-ester-based compound, a tolan-based compound, a pyrimidine-based compound, a cyclohexanecarboxylic-acid-ester-based compound, a phenylcyclohexane-based compound, and a dioxane-based compound.

An example of the type in which the liquid crystal composition is held in the light control layer 40 is any one selected from the group consisting of a polymer network type, a polymer dispersion type, and a capsule type. In the polymer dispersion type, the transparent organic polymer layer has a large number of isolated voids therein and holds liquid crystal compositions in the voids dispersed in the polymer layer. In the polymer network type, a transparent polymer network having a three-dimensional mesh shape is included and a liquid crystal composition is held in mesh-shaped voids communicated with each other. The polymer network is an example of the transparent organic polymer layer. In the capsule type, an encapsulated liquid crystal composition is held in the transparent organic polymer layer. It is to be noted that the liquid crystal composition may contain a monomer and a dichroic dye for forming the transparent organic polymer layer in addition to the liquid crystal compounds described above.

### [Planar Configuration of Sheet]

Returning to Fig.1, the edge face of the front transparent substrate 23 includes the one front outer edge face 21E, two front inner edge faces 22E, and two front connection edge faces 1B. The edge face of the front transparent substrate 23 further includes a front-facing terminal definition surface 23E. The one front outer edge face 21E, the two front inner edge faces 22E, the two front connection edge faces 1B, and the one front-facing terminal definition surface 23E have one zigzag shape that does not branch off in plan view.

The front outer edge face 21E is included in the sheet edge face 11E. The front outer edge face 21E extends in the first direction D1 in plan view. The front outer edge face 21E has a straight-line shape in plan view.

As with the front outer edge face 21E, the front inner edge face 22E extends in the first direction D1 in plan view. The front inner edge face 22E has a straight-line shape in plan view. The one front outer edge face 21E is sandwiched between the two front inner edge faces 22E in the first direction D1. The length of the front outer edge face 21E may be greater than the length of each of the front inner edge faces 22E or less than or equal to the length of each the front inner edge faces 22E in the first direction D1. The two front inner edge faces 22E may be equal to each other or different from each other in length in the first direction D1.

The edge face of the front transparent substrate 23 includes the two front connection edge faces 1B. The respective front connection edge faces 1B join the front inner edge faces 22E to the respective ends of the front outer edge face 21E one by one. The front connection edge faces 1B each extend in the second direction D2 in plan view. The length of each of the front connection edge faces 1B in the second direction D2 is less than the length of the front outer edge face 21E in the first direction D1. The length of the front connection edge face 1B in the second direction D2 is less than the length of the front inner edge face 22E in the first direction D1. The respective ends of the front outer edge face 21E are connected to the different front connection edge faces 1B. The respective front connection edge faces 1B are connected to ends of the different front inner edge faces 22E.

The front-facing terminal definition surface 23E has an inverted-U shape in plan view. The front-facing terminal definition surface 23E is disposed in the first direction D1 of the one front inner edge face 22E in plan view. The front-facing terminal definition surface 23E is connected to the one front inner edge face 22E. The front-facing terminal definition surface 23E is disposed in the direction opposite to the front inner edge face 22E in the second direction D2 in plan view. The length of the front-facing terminal definition surface 23E may be greater than the length of the front outer edge face 21E or less than or equal to the length of the front outer edge face 21E in the first direction D1. The length of the front-facing terminal definition surface 23E may be greater than the length of the front inner edge face 22E or less than or equal to the length of the front inner edge face 22E in the first direction D1.

Returning to Fig.2, an edge face of the front electrode layer 24 is continuous with the edge face of the front transparent substrate 23. The edge face of the front electrode layer 24 is continuous from the front outer edge face 21E, the front connection edge faces 1B, the front inner edge faces 22E, and the front-facing terminal definition surface 23E in the thickness direction of the front transparent substrate 23. The edge face of the front electrode layer 24 is flush with the edge face of the front transparent substrate 23 in plan view.

Returning to Fig.1, an edge face of the back transparent substrate 33 includes the two back outer edge faces 31E, two back connection edge faces 2B, and a rear-facing terminal definition surface 32E having an inverted-U shape illustrated by a dashed line in Fig. 1. The rear-facing terminal definition surface 32E is an example of a back inner edge face. The two back outer edge faces 31E, the two back connection edge faces 2B, and the rear-facing terminal definition surface 32E have one zigzag shape that does not branch off in plan view.

Each of the back outer edge faces 31E is included in the sheet edge face 11E. The two back outer edge faces 31E each extend in the first direction D1. Each of the back outer edge faces 31E has a straight-line shape continuous with the front outer edge face 21E of the front transparent film 20 in plan view.

The rear-facing terminal definition surface 32E is disposed closer to the inner side of the front surface of the front transparent substrate 23 than the front outer edge face 21E is in plan view. That is, the position of the rear-facing terminal definition surface 32E is closer to the inner side than the position of the front outer edge face 21E on the front surface of the front transparent substrate 23. The rear-facing terminal definition surface 32E is disposed from the front connection edge face 1B of the front transparent film 20 toward the inner side of the front surface of the front transparent substrate 23 in plan view. The rear-facing terminal definition surface 32E is sandwiched between the two back outer edge faces 31E in the first direction D1. The length of the rear-facing terminal definition surface 32E may be greater than the length of the front-facing terminal definition surface 23E or less than or equal to the length of the front-facing terminal definition surface 23E in the first direction D1. The length of the rear-facing terminal definition surface 32E may be greater than the length of the front inner edge face 22E or less than or equal to the length of the front inner edge face 22E in the first direction D1. The length of the rear-facing terminal definition surface 32E may be greater than the length of the front-facing terminal definition surface 23E or less than or equal to the length of the front-facing terminal definition surface 23E in the second direction D2. The length of the rear-facing terminal definition surface 32E is greater than the length of the back connection edge face 2B in the second direction D2.

The edge face of the back transparent substrate 33 includes the two back connection edge faces 2B. The respective back connection edge faces 2B join the back outer edge faces 31E to the respective ends of the rear-facing terminal definition surface 32E one by one. The back connection edge faces 2B each extend in the second direction D2 in plan view. The respective back outer edge faces 31E are connected to the different back connection edge faces 2B. The respective back connection edge faces 2B are connected to different ends of the one rear-facing terminal definition surface 32E. The boundary point of the back connection edge face 2B and the rear-facing terminal definition surface 32E is an end of the front inner edge face 22E in plan view. In other words, the front inner edge face 22E of the front transparent film 20 extends from the boundary point of the back connection edge face 2B and the rear-facing terminal definition surface 32E in the second direction D2 in plan view.

Returning to Fig.2, an edge face of the back electrode layer 34 is continuous with the edge face of the back transparent substrate 33. The edge face of the back electrode layer 34 is continuous from the back outer edge faces 31E, the rear-facing terminal definition surface 32E, and the back connection edge faces 2B in the thickness direction of the back transparent substrate 33.

Returning to Fig.1, an edge face of the light control layer 40 includes a portion that is flush with the rear-facing terminal definition surface 32E of the back transparent film 30 in plan view. The front electrode layer 24 includes a front circuit section and a rear-facing terminal 12E. The front circuit section is a portion of the front electrode layer 24 in contact with the light control layer 40.

The rear-facing terminal 12E is exposed from the light control layer 40 on a front electrode surface 24S of the front electrode layer 24. The rear-facing terminal 12E is surrounded by the front outer edge face 21E and the rear-facing terminal definition surface 32E in plan view. The edge face of the light control layer 40 partitions the front electrode layer 24 into the front circuit section and the rear-facing terminal 12E in plan view. The edge face of the back transparent film 30 partitions the front electrode layer 24 into the front circuit section and the rear-facing terminal 12E in plan view.

The edge face of the light control layer 40 includes a portion that is flush with the front-facing terminal definition surface 23E in plan view. The back electrode layer 34 includes a back circuit section and a front-facing terminal 13E. The back circuit section is a portion of the back electrode layer 34 in contact with the light control layer 40.

The front-facing terminal 13E is exposed from the light control layer 40 in a rear electrode surface 34S of the back electrode layer 34. The front-facing terminal 13E is surrounded by the back outer edge face 31E and the front-facing terminal definition surface 23E in plan view. The edge face of the light control layer 40 partitions the back electrode layer 34 into the back circuit section and the front-facing terminal 13E in plan view. The edge face of the front transparent film 20 partitions the back electrode layer 34 into the back circuit section and the front-facing terminal 13E in plan view.

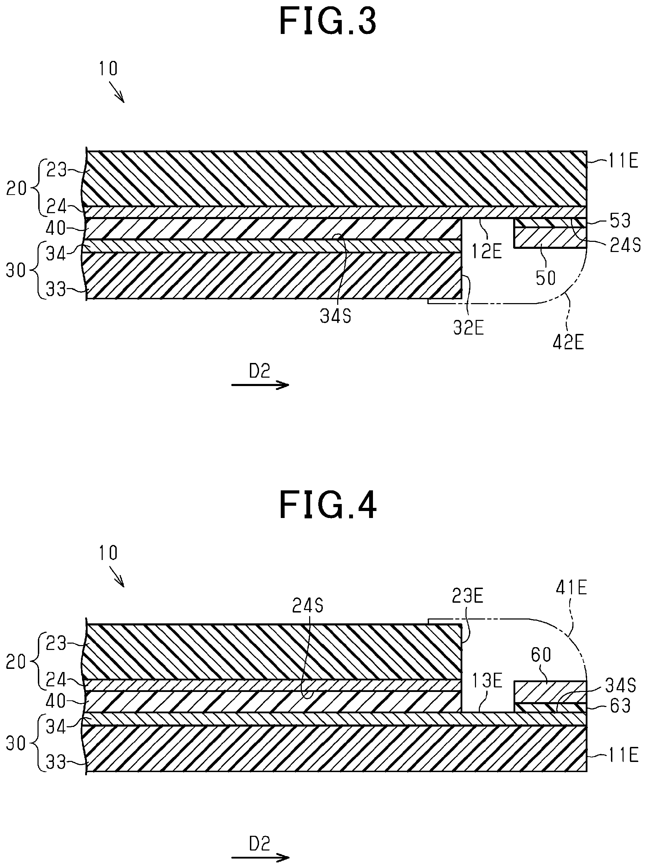

As illustrated in Fig. 3, the rear-facing terminal 12E is bonded to a front wiring substrate 50 via an electrically conductive adhesive 53. The electrically conductive adhesive 53 is, for example, at least one selected from the group of an anisotropic electrically conductive film, an anisotropic electrically conductive paste, an isotropic electrically conductive film, and an isotropic electrically conductive paste. The front wiring substrate 50 inputs a drive signal to the rear-facing terminal 12E through the electrically conductive adhesive 53.

As illustrated in Fig. 4, the front-facing terminal 13E is bonded to a back wiring substrate 60 via an electrically conductive adhesive 63. The electrically conductive adhesive 63 is, for example, at least one selected from the group of an anisotropic electrically conductive film, an anisotropic electrically conductive paste, an isotropic electrically conductive film, and an isotropic electrically conductive paste. The back wiring substrate 60 inputs a drive signal to the front-facing terminal 13E through the electrically conductive adhesive 63.

### [Sealing Section]

Returning to Fig.2, the front connection edge face 1B and the back connection edge face 2B are included in a slit S extending through the front transparent substrate 23 and the back transparent substrate 33. The whole of the front connection edge face 1B overlaps with the whole of the back connection edge face 2B in plan view. The slit S extends in the second direction D2. The slit S is an overlap between the front connection edge face 1B and the back connection edge face 2B in plan view.

The light control sheet 10 includes a front-directed sealing section 41E and a back-directed sealing section 42E. In Fig. 1, the region occupied by the front-directed sealing section 41E is thick-dotted. The region occupied by the back-directed sealing section 42E is thin-dotted. The superimposition region of the front-directed sealing section 41E and the back-directed sealing section 42E is thick-dotted as with the front-directed sealing section 41E.

The front-directed sealing section 41E and the back-directed sealing section 42E are insulating resins each having hygroscopicity. Each of sealants included in the front-directed sealing section 41E and the back-directed sealing section 42E is an epoxy resin, an acryl-based resin, or the like.

Shown thin-dotted in Fig. 1, the back-directed sealing section 42E is supported by the portion between the front outer edge face 21E and the rear-facing terminal definition surface 32E in the front electrode surface 24S of the front electrode layer 24 in plan view. The back-directed sealing section 42E covers the rear-facing terminal 12E, the electrically conductive adhesive 53, and the front wiring substrate 50. As illustrated in Figs. 1 and 2, the back-directed sealing section 42E covers the region around the rear-facing terminal 12E in the back surface of the back transparent film 30. The back-directed sealing section 42E seals a portion of the edge face of the light control layer 40 overlapping with the rear-facing terminal definition surface 32E.

Shown thick-dotted in Fig. 1, the front-directed sealing section 41E is supported by the portion between the back outer edge face 31E and the front-facing terminal definition surface 23E in the back electrode surface 34S of the back electrode layer 34 in plan view. The front-directed sealing section 41E covers the front-facing terminal 13E, the electrically conductive adhesive 63, and the back wiring substrate 60. The front-directed sealing section 41E covers the region around the front-facing terminal 13E in the front surface of the front transparent film 20. The front-directed sealing section 41E seals a portion of the edge face of the light control layer 40 overlapping with the front-facing terminal definition surface 23E.

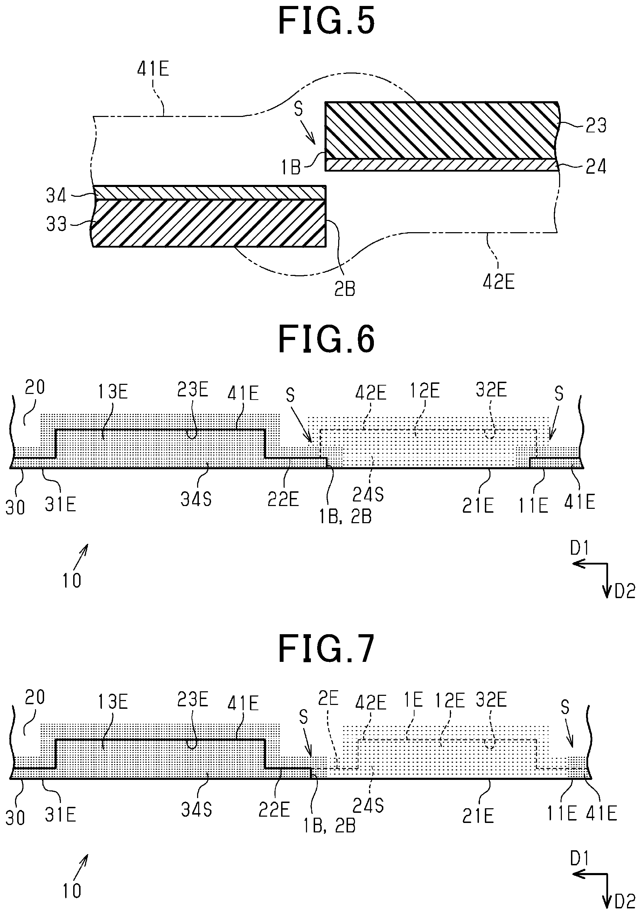

The front-directed sealing section 41E is supported by the portion between the back outer edge face 31E and the front inner edge face 22E in the back electrode surface 34S of the back electrode layer 34 in plan view. As illustrated in Figs. 1 and 2, the front-directed sealing section 41E covers the region around the front inner edge face 22E in the front surface of the front transparent film 20. The front-directed sealing section 41E seals a portion of the edge face of the light control layer 40 overlapping with the front inner edge face 22E. As illustrated in Figs. 2 and 5, the front-directed sealing section 41E is connected to the back-directed sealing section 42E through the slit S. The front-directed sealing section 41E is superimposed on the back-directed sealing section 42E in a region including the slit S.

According to the embodiment, effects listed below are obtained.
(1) The portion of the edge face of the light control layer 40 overlapping with the front inner edge face 22E in plan view is sealed by the front-directed sealing section 41E. This seals the portion of the edge face of the light control layer 40 overlapping with the front inner edge face 22E.
(2) The portion of the edge face of the light control layer 40 overlapping with the rear-facing terminal definition surface 32E in plan view is sealed by the back-directed sealing section 42E. This seals the portion of the edge face of the light control layer 40 overlapping with the rear-facing terminal definition surface 32E.
(3) The front-directed sealing section 41E is connected to the back-directed sealing section 42E through the slit S and overlaps with the back-directed sealing section 42E in the slit S disposed at the edge of the light control sheet 10. The connection between the back-directed sealing section 42E and the front-directed sealing section 41E therefore makes the sealed edge face of the light control layer 40 continuous. That is, the back-directed sealing section 42E and the front-directed sealing section 41E divided into the front and the back function as a single sealing section. The back-directed sealing section 42E superimposed on the front-directed sealing section 41E in the slit S then increases the mechanical strength of a sheet in the slit S not supported by the front transparent substrate 23 or the back transparent substrate 33.
(4) A portion of the front connection edge face 1B not overlapping with the back transparent substrate 33 in plan view is mechanically weaker than the portion in which the front transparent substrate 23 overlaps with the back transparent substrate 33 because the portion of the front connection edge face 1B is not supported by the back transparent substrate 33. A portion of the back connection edge face 2B not overlapping with the front transparent substrate 23 is also mechanically weaker than the portion in which the front transparent substrate 23 overlaps with the back transparent substrate 33 because the portion of the back connection edge face 2B is not supported by the front transparent substrate 23. In this regard, a configuration in which the whole of the front connection edge face 1B overlaps with the whole of the back connection edge face 2B increases the mechanical strength in comparison with a configuration in which a portion not overlapping with the transparent substrates 23 and 33 is included.
(5) The back-directed sealing section 42E is supported by the whole of the rear-facing terminal 12E and the mechanical strength in the slit S thus further increases. A portion of the edge face of the light control layer 40 that partitions the rear-facing terminal 12E then has higher sealability.
(6) The front outer edge face 21E and the back outer edge face 31E are continuous in a straight-line shape and the edge of the light control sheet 10 thus increases in mechanical strength in comparison with a case where the front outer edge face 21E and the back outer edge face 31E are spaced apart from each other or the front outer edge face 21E and the back outer edge face 31E are bent. In this way, the front-directed sealing section 41E is disposed along the edge of the light control sheet 10 which is mechanically increased in strength, and the front-directed sealing section 41E thus offers higher sealability and the mechanical strength in the slit S further increases.

Additionally, it is also possible to modify and carry out the embodiment as below.

### [Front Connection Edge Face 1B and Back Connection Edge Face 2B]

- An edge face of the rear-facing terminal 12E may be disposed closer to the inner side of the front surface of the front transparent substrate 23 than the front outer edge face 21E is in plan view. In this case, the back outer edge face 31E may be disposed closer to the inner side of the front surface of the front transparent substrate 23 than the front outer edge face 21E is. That is, the position of the edge face of the rear-facing terminal 12E may be closer to the inner side than the position of the front outer edge face 21E on the front surface of the front transparent substrate 23. In this case, the position of the back outer edge face 31E may be closer to the inner side than the position of the front outer edge face 21E is. That is, the front outer edge face 21E and the back outer edge face 31E may be continuous in a zigzag shape or a curved shape in plan view. In addition, the front outer edge face 21E and the back outer edge face 31E may be spaced apart from each other in the first direction D1 in plan view. It is to be noted that, in a case where the front outer edge face 21E and the back outer edge face 31E are spaced apart from each other in the first direction D1, the front connection edge face 1B and the back connection edge face 2B are also spaced apart from each other in the first direction D1 in plan view.
- As illustrated in Fig. 6, the front connection edge face 1B and the back connection edge face 2B may be disposed in the second direction D2 of the rear-facing terminal definition surface 32E. Even in this configuration, effects equivalent to those of (1) to (6) are obtained.
- As illustrated in Fig. 7, the rear-facing terminal definition surface 32E may include a first back inner edge face 1E and a second back inner edge face 2E in plan view. The distance between the front outer edge face 21E and the first back inner edge face 1E may be greater than the distance between the front outer edge face 21E and the second back inner edge face 2E. The first back inner edge face 1E and the front outer edge face 21E sandwich the rear-facing terminal 12E in plan view. The front connection edge face 1B may join the second back inner edge face 2E and the front outer edge face 21E in plan view.

According to the modification example, the effects listed below can be obtained.

(7) The area of the rear-facing terminal 12E connected to a wiring line is all the larger because the distance between the front outer edge face 21E and the first back inner edge face 1E is greater than the distance between the front outer edge face 21E and the second back inner edge face 2E.

(8) The length of the front connection edge face 1B is all the shorter because the distance between the front outer edge face 21E and the second back inner edge face 2E is less than the distance between the front outer edge face 21E and the first back inner edge face 1E. That is, the slit S extending through the front transparent substrate 23 and the back transparent substrate 33 is all the smaller in size because the front outer edge face 21E and the second back inner edge face 2E have a shorter distance. Therefore, while the area of the rear-facing terminal 12E is secured, a decrease in mechanical strength derived from the portion not supported by the transparent substrates 23 and 33 is suppressed.

(9) The distance between the rear-facing terminal 12E and the slit S in the first direction D1 is all the longer for the presence of the second back inner edge face 2E in between. The rear-facing terminal 12E to which an external wiring line is connected undergoes a mechanical load such as warpage or tension received from the external wiring line. The configuration in which the slit S not supported by the transparent substrates 23 and 33 and the rear-facing terminal 12E are spaced apart decreases the mechanical load itself in the slit S in the light control sheet 10.

- Furthermore, as illustrated in Fig. 7, the second back inner edge face 2E may have a straight-line shape that conforms to the front outer edge face 21E. **In** this case, the second back inner edge face 2E may be continuous with the front inner edge face 22E in a straight-line shape and the gap between the front inner edge face 22E and the back outer edge face 31E may be connected to the front-facing terminal 13E.

As described above, the rear-facing terminal 12E or the front-facing terminal 13E to which an external wiring line is connected undergoes a mechanical load such as warpage or tension received from the external wiring line. In this regard, according to the modification example, the slit S not supported by the two transparent substrates 23 and 33 and the two terminals 12E and 13E are spaced apart by the length of the second back inner edge face 2E and the length of the front outer edge face 21E. As a result, effects equivalent those of (9) are further enhanced.

### [Back Electrode Layer 34]

- The edge face of the back electrode layer 34 may be disposed closer to the inner side of the front surface of the front transparent substrate 23 than the back outer edge face 31E is in plan view. That is, the position of the edge face of the back electrode layer 34 may be closer to the inner side than the position of the back outer edge face 31E is on the front surface of the front transparent substrate 23. The edge face of the back electrode layer 34 may overlap with the front inner edge face 22E in plan view. Alternatively, the back electrode layer 34 may be cut along a line overlapping with the front inner edge face 22E in plan view.

### [Slit S]

- The direction in which the slit S extends is not limited to the second direction D2 and may be a direction intersecting with the second direction D2. The shape of the slit S is not limited to a straight line in plan view and may be a line shape such as a curve or a zigzag line.
- The front connection edge face 1B and the back connection edge face 2B included in the slit S may be spaced apart from each other in the second direction D2. That is, the slit S may be the gap between the front connection edge face 1B and the back connection edge face 2B in plan view or the combination of an overlapping portion of the front connection edge face 1B and the back connection edge face 2B and the gap between the front connection edge face 1B and the back connection edge face 2B.

## Claims

1. A light control sheet comprising:
a front transparent substrate supporting a front electrode layer;
a back transparent substrate supporting a back electrode layer; and
a light control layer containing a liquid crystal composition, wherein
the front electrode layer and the back electrode layer are disposed between the front transparent substrate and the back transparent substrate,
the light control layer is sandwiched between the front electrode layer and the back electrode layer,
in plan view from a viewpoint opposed to a front surface of the front transparent substrate,
an edge face of the front transparent substrate includes a front inner edge face, a front outer edge face, and a front connection edge face, the front connection edge face joining the front inner edge face and the front outer edge face,
an edge face of the back transparent substrate includes a back inner edge face, a back outer edge face, and a back connection edge face, the back connection edge face joining the back inner edge face and the back outer edge face, and
the back inner edge face is disposed closer to an inner side of the front surface than the front outer edge face is,
the back outer edge face is disposed closer to an outer side of the front surface than the front inner edge face is,
the front connection edge face and the back connection edge face are included in a slit extending through the front transparent substrate and the back transparent substrate,
the light control sheet further includes
a back-directed sealing section that is a portion of the front transparent substrate exposed from the light control layer in plan view, the back-directed sealing section being supported by a portion between the front outer edge face and the back inner edge face, the back-directed sealing section sealing a portion of an edge face of the light control layer overlapping with the back inner edge face, and
a front-directed sealing section that is a portion of the back transparent substrate exposed from the light control layer in plan view, the front-directed sealing section being supported by a portion between the back outer edge face and the front inner edge face, the front-directed sealing section sealing a portion of the edge face of the light control layer overlapping with the front inner edge face, and
the front-directed sealing section is connected to the back-directed sealing section through the slit and is superimposed on the back-directed sealing section in a region including the slit.

2. The light control sheet according to claim 1, wherein a whole of the front connection edge face overlaps with a whole of the back connection edge face in the plan view.

3. The light control sheet according to claim 1, wherein
the front electrode layer includes a rear-facing terminal,
the rear-facing terminal is surrounded by the front outer edge face and the back inner edge face in plan view, and
the back-directed sealing section covers the rear-facing terminal.

4. The light control sheet according to claim 1, wherein
the front electrode layer includes a rear-facing terminal,
the back inner edge face includes a first back inner edge face and a second back inner edge face,
a distance between the front outer edge face and the first back inner edge face is greater than a distance between the front outer edge face and the second back inner edge face, and the first back inner edge face and the front outer edge face sandwich the rear-facing terminal in plan view, and
the front connection edge face joins the second back inner edge face and the front outer edge face in plan view.

5. The light control sheet according to claim 1, wherein, in plan view,
the front outer edge face and the back outer edge face are continuous in a straight-line shape, and
the front inner edge face has a straight-line shape that conforms to the back outer edge face.

6. The light control sheet according to claim 5, wherein
the front electrode layer includes a rear-facing terminal,
the back electrode layer includes a front-facing terminal,
the back inner edge face includes a first back inner edge face and a second back inner edge face,
in plan view,
the front outer edge face and the back outer edge face are continuous in a straight-line shape, and
the second back inner edge face has a straight-line shape that conforms to the front outer edge face, and is continuous with the front inner edge face in a straight-line shape,
a distance between the front outer edge face and the first back inner edge face is greater than a distance between the front outer edge face and the second back inner edge face, and the first back inner edge face and the front outer edge face sandwich the rear-facing terminal in plan view,
the front connection edge face joins the second back inner edge face and the front outer edge face in plan view, and
a gap between the front inner edge face and the back outer edge face is connected to the front-facing terminal.
